# EUROPEAN PATENT APPLICATION

(11) **EP 1 139 229 A2**
(43) Date of publication of application: **04.10.2001**
(21) Application number: 01106021.7
(22) Date of filing: 12.03.2001
(51) Int. Cl.: G06F 15/173, H04L 12/56

(54) **Scalable computer cluster**

(30) Priority: 31.03.2000 US 539919
(71) Applicant: Alcatel USA Sourcing, L.P., Plano, Texas 75075-5813 (US)
(72) Inventor: Fourcand, Serge F., Fairview, Texas 75069 (US); Dubois, Gerald R., Lucas, Texas 75002 (US)
(74) Representative: Schäfer, Wolfgang, Dipl.-Ing.

(57) **Abstract**

A scalable computer cluster (10) includes a first plurality of computing elements (12) coupled to a first switch network (14) and a second switch network (16). Each computing element (12) couples to the other computing elements (12) through the first switch network (14) and the second switch network (16). Each computing element (12) has a unique identification on the first switch network (14) and the second switch network (16) in order to transfer information within the scalable computer cluster (10). The scalable computer cluster (10) includes a clock system timing generator (18) that distributes timing signals to the computing elements (12) for further distribution to individual processing boards (30). The scalable computer cluster (10) includes an alarm controller (20) that collects alarm and status information gathered by each of the computing elements (12) The computing elements (12) collect alarm and status information gathered by respective processing boards (30). In this manner, a second plurality of computing elements (13) coupled to a third switch network (15) and a fourth switch network (17) an be effectively added to the scalable computer cluster (10) in order to implement expansion as desired.

## Description

### TECHNICAL FIELD OF THE INVENTION

The present invention relates in general to computer systems and more particularly to a scalable computer cluster.

### BACKGROUND OF THE INVENTION

Conventional computer systems typically are developed as fixed sized systems with no flexibility for growth or expansion. In those computer systems that can expand and become larger systems, the amount of increase in size that the computer system may expand to is limited. When attempting to expand a computer system, it becomes difficult to implement the clocking scheme for the expansion portion and synchronize it with the rest of the system. Therefore, it is desirable to provide a technique to expand a computer system as desired without running into limitations on how the computer system can expand.

### SUMMARY OF THE INVENTION

From the foregoing, it may be appreciated by those skilled in the art that a need has arisen for a computer system that may be expanded as desired. In accordance with the present invention, a scalable computer cluster is provided that substantially eliminates or reduces disadvantages and problems associated with conventional computer systems.

According to an embodiment of the present invention, there is provided as scalable computer cluster that includes a first plurality of computing elements. A first switch network couples the first plurality of computing elements to each other. A second switch network couples the first plurality of computing elements to each other. The first plurality of computing elements each have a unique identification on the first and second switch networks. In this manner, alarm, status, clock, and synchronization information may be distributed to any processing board of each of the first plurality of computing elements in order to expand the system.

The present invention provides various technical advantages over conventional computer systems. For example, one technical advantage is to provide a base computer cluster that can be combined with another base computer cluster in order to expand the system. Another technical advantage is to provide a technique to distribute clock and other information to computer elements in a computer system that allows for the easily addition or removal of computer elements in the computer system. Yet another technical advantage is to use conventional computer system products, such as Ethernet and peripheral component interface devices, for a computer system that provides for effective expansion. Other technical advantages may be readily apparent to those skilled in the art from the following figures, description, and claims.

### BRIEF DESCRIPTION OF THE DRAWINGS

For a more complete understanding of the present invention and the advantages thereof, reference is now made to the following description taken in conjunction with the accompanying drawings, wherein like reference numerals represent like parts, in which:
FIGURE 1 illustrates a block diagram of a basic configuration for a scalable computer cluster;
FIGURE 2 illustrates a block diagram of the scalable computer cluster; and
FIGURE 3 illustrates a block diagram of a distribution concept for the scalable computer cluster.

### DETAILED DESCRIPTION OF THE INVENTION

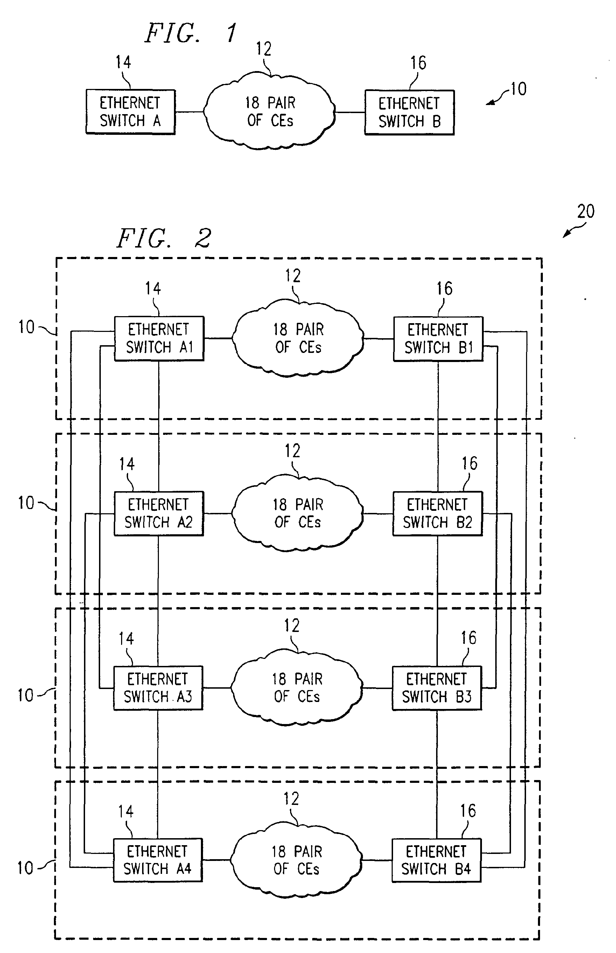

FIGURE 1 is a block diagram of a basic configuration 10 of a scalable computer cluster. Basic configuration 10 includes a first plurality of computing elements 12, a first switch network 14, and a second switch network 16. First switch network 14, and second switch network 16 are preferably Ethernet switches. Each computing element 12 can communicate with every other computing element 12 over either first switch network 14 or second switch network 16. Each computing element 12 has a unique identification on each of first switch network 14 and second switch 16. The unique identifications may be implemented through individual geographical addressing signals. Computing elements 12 may also implement an internal compact peripheral component interface bus structure.

First switch network 14 and second switch network 16, as Ethernet switches, are the backbone of the scalable computer cluster. The Ethernet switches provide full wireline switching at 100 base T speeds. Each computing element 12 has two 100 megabit Ethernet connections, one to first switch network 14 and one to second switch network 16. The number of computing elements 12 in the first plurality of computing elements 12 may be based on the number of ports available on each of the Ethernet switches. For example, if each Ethernet switch has 36 ports, then there is a raw connectivity for 36 computing elements 12, or 18 redundant pairs, is available.

FIGURE 2 is a block diagram of a larger scalable computer cluster 20. Scalable computer cluster 20 includes a number of basic configurations 10. Each first switch network 14 of a basic configuration 10 is coupled to other first switch networks 14 of other basic configurations 10 in scalable computer cluster 20. Similarly, each second switch network 16 of a basic configuration 10 is coupled to other second switch networks 16 of other basic configurations 10 in scalable computer cluster 20. In this manner, larger configurations for scalable computer cluster 20 may be accomplished by adding more Ethernet switches in order to provide more computing element 12 connectivity. Using the same 36 port Ethernet switch example, scalable computer cluster 20 as shown yields a raw connectivity of 144 computing elements 12 or 72 redundant pairs. Each first (or second) switch network 14 connects to other first (or second) switch networks 14 using a 1000 megabit, or 1 gigabit, link.

As shown, scalable computer cluster 20 preferably uses Ethernet link layer technology as the internal vehicle for messaging between computing elements 12. The Ethernet switches are connected to computing elements 12 in a star configuration so that each computing element 12 may communicate with any other computing element 12 within scalable computer cluster 20. The Ethernet switches provide full duplex 100 megabit links to each computing element 12 within a basic configuration 10. The Ethernet switches also have full duplex gigabit links for interconnecting one Ethernet switch to other Ethernet switches.

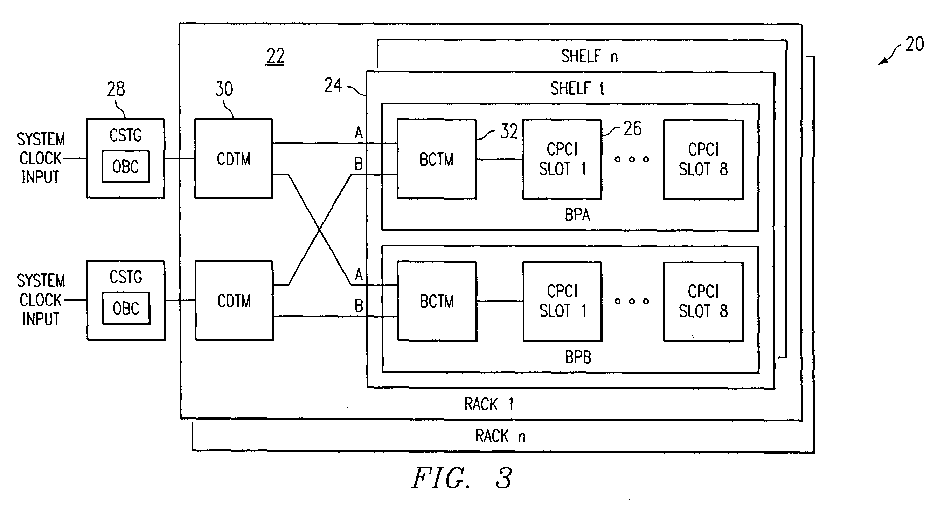

Scalable computer cluster 20 uses a multi-stage distribution concept for its clock system. FIGURE 3 shows how scalable computer cluster 20 implements its three tiered clock system. Scalable computer cluster 20 has one or more rack systems 22. Each rack system 22 includes one or more shelves 24. Each shelf 24 includes two computing elements 12 either acting individually or as an active/standby redundant pair. Each computing element 12 includes one or more processing boards 26 that perform the processing for computing element 12. Scalable computer cluster 20 includes a compact system timing generator 28 that receives a system clock input. Compact system timing generator 28 distributes timing signals to a clock distribution transition module 30 on each rack system 22. Clock distribution transition module 30 distributes timing signals to a bus control transition module 32 on each shelf 24 on the rack system 22. Bus control transition module 32 distributes timing signals to each individual processing board 26 in shelf 24.

In this three tiered distribution concept, timing signals are effectively distributed regardless of the size of scalable computer cluster 20 and provide an efficient technique to facilitate the addition and deletion of computing elements 12. Synchronization of computing elements 12 may also be performed through the three tiered distribution concept. Synchronization signals may be distributed in a similar manner as clock signals through generation and distribution of the timing signals.

Through the same or similar three tiered distribution concept, a reset philosophy for scalable computer cluster 20 may be implemented. Reset commands may be generated at compact system timing generator 28 and distributed down scalable computer cluster 20 through clock distribution transition modules 30 and bus control transition modules 32 to the individual processing boards 26. Each processing board 26 monitors the timing signals for a reset command and performs a hardware reset upon identifying the reset command. Reset commands for the Ethernet switches may be generated from bus control transition module 32.

System alarm and status functions also implement a three tiered distribution concept. Each processing board 26 collects alarm and status information for distribution up to bus control transition module 32. Each bus control transition module 32 gathers alarm and status information from their associated processing boards 26 for distribution up to clock distribution transition module 30. Each clock distribution transition module 30 gathers alarm and status information from their associated bus control transition modules 30 for distribution up to compact system timing generator 28 are some other alarm controller and processing unit.

Thus, it is apparent that there has been provided in accordance with the present invention, a scalable computer cluster that satisfies the advantages set forth above. Although the present invention has been discussed in detail, it should be understood that various changes, substitutions, and alterations may be readily ascertainable by those skilled in the art and may be made herein without departing from the spirit and scope of the present invention as defined by the following claims.

## Claims

1. A scalable computer cluster, comprising:
a first plurality of computing elements;
a first switch network coupling the first plurality of computing elements to each other,
a second switch network coupling the first plurality of computing elements to each other, each of the first plurality of computing elements having a unique identification on the first switch network and the second switch network.

2. The scalable computer cluster of Claim 1, further comprising:
a second plurality of computing elements;
a third switch network coupling the second plurality of computing elements to each other;
a fourth switch network coupling the second plurality of computing elements to each other, each of the second plurality of computing elements having a unique identification on the third switch network and the fourth switch network, wherein the first switch network is coupled to the third switch network and the second switch network is coupled to the fourth switch network in order to expand the processing power of the scalable computer cluster.

3. The scalable computer cluster of Claim 1, wherein each of the first plurality of computer elements includes processing boards, each of the first plurality of computer elements including a timing source operable to distribute timing signals to each of their associated processing boards.

4. The scalable computer cluster of Claim 3, further comprising:
a clock system timing generator operable to distribute timing signals to each timing source of the first plurality of computer elements for subsequent distribution to the processing boards.

5. The scalable computer cluster of Claim 3, wherein each of the first plurality of computer elements receives reset commands for further distribution to the processing boards.

6. The scalable computer cluster of Claim 3, wherein each processing board generates alarm and status information for gathering by its associated computer element.

7. The scalable computer cluster of Claim 6, further comprising:
an alarm controller operable to gather alarm and status information from the first plurality of computer elements upon receiving alarm and status information for respective processing boards.

8. The scalable computer cluster of Claim 1, wherein the first and second plurality of switch networks implements on Ethernet protocol.

9. The scalable computer cluster of Claim 1, wherein the first plurality of computer elements internally implement a compact peripheral component interface bus structure.

10. The scalable computer cluster of Claim 1, wherein the unique identifications are established through individual geographic addressing signals.

11. The scalable computer cluster of Claim 3, wherein the timing signals include synchronization and clocking information.
